**Europäisches Patentamt**

**European Patent Office**

**Office européen des brevets**

(19)

(11) Veröffentlichungsnummer : **0 184 544**
**B1**

(12)  # EUROPÄISCHE PATENTSCHRIFT

(45) Veröffentlichungstag der Patentschrift :
21.12.88

(21) Anmeldenummer : 85730148.5

(22) Anmeldetag : 26.10.85

(51) Int. Cl.⁴ : **F 28 F 13/12**, B 21 D 11/14,
B 21 D 53/02, B 29 C 53/14

(54) Wärmetauscherrohr und Verfahren zur Herstellung einer Wendel für ein derartiges Rohr.

(30) Priorität : 30.10.84 DE 8431987 U
11.10.85 DE 8529317 U

(43) Veröffentlichungstag der Anmeldung :
11.06.86 Patentblatt 86/24

(45) Bekanntmachung des Hinweises auf die Patenterteilung : 21.12.88 Patentblatt 88/51

(84) Benannte Vertragsstaaten :
AT BE CH DE FR GB IT LI LU NL SE

(56) Entgegenhaltungen :
EP—A— 0 011 175
EP—A— 0 125 792
CH—A— 488 540
DE—A— 2 421 550
DE—B— 1 069 165
FR—A— 367 584
FR—A— 1 425 901
FR—A— 1 495 212
FR—A— 2 295 394
FR—A— 2 404 511
FR—A— 2 436 959
US—A— 1 496 801
US—A— 1 818 082

(73) Patentinhaber : Joh. Vaillant GmbH u. Co.
Berghauser Strasse 40 Postfach 10 10 20
D-5630 Remscheid 1 (DE)
DE IT LU SE
Süddeutsche Kühlerfabrik Julius Fr. Behr GmbH &
Co. KG
Mauserstrasse 3
D-7000 Stuttgart 30 (DE)
AT BE CH DE FR GB IT LI LU NL SE
COFRABEL N.V.
Goldenhopestraat 15
B-1620 Drogenbos (BE)
BE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial
Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI

(72) Erfinder : **Braun, Bernd**
**Sedanstrasse 5**
**D-5630 Remscheid (DE)**
Erfinder : **Humpolik, Bohumil**
**Odenheimerstrasse 19**
**D-7140 Ludwigsburg (DE)**
Erfinder : **Staffa, Karl Heinz**
**Balinger Strasse 79**
**D-7000 Stuttgart 80 (DE)**

(74) Vertreter : **Heim, Johann-Ludwig, Dipl.-Ing. et al**
**c/o Joh. Vaillant GmbH u. Co Berghauser Strasse 40**
**Postfach 10 10 20**
**D-5630 Remscheid 1 (DE)**

## Beschreibung

Die Erfindung bezieht sich auf ein Wärmetauscherrohr mit elliptischem oder ovalem Querschnitt, insbesondere auf solche, die innen von einer Flüssigkeit, insbesondere Wasser, durchströmt und außen von einem Gas, insbesondere Luft oder heißem Abgas, beaufschlagt sind. Die Erfindung bezieht sich ferner auf ein Verfahren zur Herstellung einer Wendel für das Wärmetauscherrohr.

Derartige Wärmetauscherrohre sind bekannt, z. B. durch die DE-A-33 21 456. Diese vorbekannten Wärmetauscherrohre sind zwar als Turbulenzerzeuger für die die Rohre durchströmende Flüssigkeit nicht ungeeignet, sie weisen jedoch den Nachteil eines relativ hohen Druckabfalles für die Flüssigkeit auf, da sie den Strömungsquerschnitt der Rohre nicht unerheblich reduzieren — sie wirken somit als Widerstandskörper.

Weiterhin ist aus der DE-B-1 069 165 ein Röhrenwärmetauscher für die Medien Luft und Wasser bekanntgeworden, wobei die Rohre bei elliptischer Querschnittsausbildung mit einem Schraubeneinbau versehen sind, wobei der Kreisradius der Schraube etwa der kleinen Halbachse des elliptischen Querschnitts des Rohres entspricht.

Bei kreisrunder Ausbildung des Rohres ist ein im Querschnitt dreieckig gewickeltes Schraubenband vorgesehen. In beiden Ausführungsbeispielen liegt somit das Schraubenband nicht an der Innenwandung des Rohres überwiegend an.

Aufgabe der vorliegenden Erfindung ist es daher, Wärmetauscherrohre der eingangs genannten Art zu schaffen, die einerseits eine hinreichende Turbulenz erzeugen und damit eine verbesserte Wärmeübertragung an der Innenseite des Rohres bewirken sowie andererseits einen möglichst niedrigen Druckabfall für das die Rohre durchströmende Medium verursachen. Ferner sollen Siedegeräusche im Wasserweg vermieden werden.

Diese Aufgabe wird erfindungsgemäß dadurch gelöst, daß die Projektion der Wendel in Richtung der Längsachse des Rohres den gesamten Querschnitt des Rohres ausfüllt, daß die Breite der Wendel periodisch zwischen einem Minimum (B) und einem Maximum (A) variiert und die Wendel in der Weise verdrillt ist, daß die Richtung der Längsachse des Rohres in einem der halben Steigung der Wendel entsprechenden Abstand aufeinanderfolgenden maximalen und minimalen Breiten jeweils um 180° gegeneinander verdreht sind, wobei die räumlich verlaufenden Ränder der Wendel an der Innenwand des Rohres anliegen.

Der Vorteil dieses wendelförmigen Turbulenzeinbaus besteht darin, daß einerseits die Strömungsgeschwindigkeit des Mediums im Rohr infolge Verlängerung des Weges und damit auch die Turbulenz erhöht und andererseits der Druckabfall für das Medium reduziert wird, da die Wendel den Strömungsquerschnitt des Rohres nur unwesentlich vermindert.

Durch einen wellenförmigen Zuschnitt des ebenen Streifens erhält man nach dem Verformen eine Wendel, die den elliptischen oder ovalen Querschnitt der Rohre vollständig ausfüllt. die also mit ihrem Umfang allseits an der Innenwand des Rohres anliegt. Hierdurch wird der gesamten Strömung im Rohr ein wendelförmiger Verlauf aufgezwungen.

Nach einer weiteren Ausgestaltung der Erfindung gemäß Anspruch 2 besteht die Wendel aus einem metallischen Bandmaterial, dessen Vorteil darin besteht, daß einerseits ein sauberer wellenförmiger Zuschnitt und andererseits ein anschließendes Verformen des Bandes — mit plastischer Verformung — möglich ist.

Nach einer weiteren vorteilhaften Ausbildung gemäß Anspruch 3 weist die Wendel im Bereich ihrer Längsachse eine Verstärkung, z. B. in Form einer Materialverdickung oder auch in Form einer Sicke auf. Dadurch ergibt sich der Vorteil, daß die Wendel nach dem Verformen besonders gut « steht », d. h., daß ihre Längsachse geradlinig verläuft, wodurch diese Wendel besonders gut für eine automatische Montage geeignet ist.

Nach einer weiteren vorteilhaften Ausgestaltung gemäß Anspruch 4 besteht die Wendel aus Kunststoff, wodurch sich eine Kostenersparnis ergibt.

Nach einer weiteren vorteilhaften Ausbildung gemäß Anspruch 5 weist die Wendel sowohl eine linksgängige als auch eine rechtsgängige Steigung auf — dadurch ergibt sich eine erhöhte Turbulenz und damit ein verbesserter Wärmeübergang auf der Innenwand des Rohres.

Nach einer weiteren vorteilhaften Ausgestaltung der Erfindung gemäß Anspruch 6 können die Ränder des Blechstreifens bzw. der Wendel mit der Innenwand des Rohres verbunden sein. z. B. durch Löten oder Schweißen. Damit wird das Rohr in vorteilhafter Weise versteift und eignet sich besonders für den Einbau in Gas/Wasser-Heizer.

Weitere Ausgestaltungen der Erfindung betreffen Verfahren zur Herstellung der vorgenannten Wendeln.

Gemäß Anspruch 7. bestehen die grundsätzlichen Verfahrensschritte darin, daß die Ränder eines ebenen Bandes wellenförmig zugeschnitten werden, wobei die maximale Breite A der großen Achse a des Rohrquerschnittes, die minimale Breite B der kleinen Achse b des Rohrquerschnittes entsprechen und daß das dermaßen zugeschnittene Band anschließend in der Weise zu einer Wendel verformt wird, daß der Abstand H/2 der maximalen Breiten A und der minimalen Breiten B auf der Längsachse der halben Steigung h/2 der Wendel entsprechen.

Gemäß Anspruch 8 erfolgt diese Verformung in einer Düse mit einem Verdrillkanal. Vorteilhaft bei diesem Verfahren ist einerseits die kontinuierliche Wendelherstellung und andererseits ein sauberer wendelförmiger Verlauf des verdrillten Bandes, so daß sich auch ein minimaler Druckabfall für das Strömungsmedium ergibt.

Nach Anspruch 9 kann die Wendel auch durch Prägen mit einer Vielzahl von Stempeln hergestellt werden, wobei dieses Verfahren nicht kontinuierlich, sondern taktweise arbeitet. Ein Vorteil besteht darin, daß man durch verschiedene Ausbildung oder Anordnung der einzelnen Stempel nebeneinander sowohl eine linksgängige als auch eine rechtsgängige Steigung für die Wendel erzeugen kann.

Gemäß Anspruch 10 kann das zugeschnittene Band in einem kontinuierlichen Verfahren durch Umformwalzen zu einer Wendel verformt werden, wobei eine Synchronisation des zugeschnittenen Bandes mittels eines Paares von Korrekturwalzen erfolgt.

Gemäß Anspruch 11 kann der Zuschnitt des Bandes derart kontinuierlich erfolgen, daß der wellenförmige Verlauf der Ränder mit Schneidwalzen erzeugt wird. Durch Parallelschaltung von mehreren Schneidwalzen können gleichzeitig mehrere « gewellte » Bänder aus einem gemeinsamen Ausgangsband hergestellt werden, die dann verschiedenen Stationen zur weiteren Umformung in eine Wendel zugeführt werden.

Gemäß Anspruch 12 kann eine Wendel aus Kunststoff vorteilhaft dadurch hergestellt werden, daß zunächst ein ebener Kunststoffstreifen mit einem gewellten Randverlauf extrudiert wird. Der gewellte Randverlauf wird dabei durch eine spezielle Extruderdüse mit variabler Breite erzeugt. Anschließend kann der ebene, « gewellte » Kunststoffstreifen zu einer Wendel umgeformt, z. B. verdrillt werden.

Ausführungsbeispiele der Erfindung sind anhand der Zeichnung dargestellt und werden im folgenden näher beschrieben.

Es zeigen :

Fig. 1 das wellenförmig zugeschnittene ebene Band mit einem Schnitt I-I,

Fig. 2 die Wendel von ihrer Schmalseite mit einem Schnitt II-II,

Fig. 3 die Wendel von ihrer Breitseite mit einem Schnitt III-III,

Fig. 4 eine weitere Querschnittsform des Bandmaterials,

Fig. 5 eine Vorrichtung zur Herstellung einer Wendel durch Verdrillen,

Fig. 6 eine Vorrichtung zur Herstellung der Wendel durch Walzen,

Fig. 7 eine Vorrichtung zur Herstellung der Wendel durch Prägen,

Fig. 8 eine Extrusionsdüse für die Herstellung eines Kunststoffstreifens variabler Breite,

Fig. 9 einen schematischen Querschnitt durch das Wärmetauscherrohr eines Wärmetauschers,

Fig. 10 zeigt einen Längsschnitt durch das Wärmetauscherrohr, das normalerweise waagerecht angeordnet ist,

Fig. 11 stellt den Zuschnitt des die Wendel verkörpernden Blechstreifens dar, und

Fig. 12-14 zeigen das Wärmetauscherrohr bzw. den Blechstreifen in einer um ein Viertel der Ganghöhe versetzten Stellung.

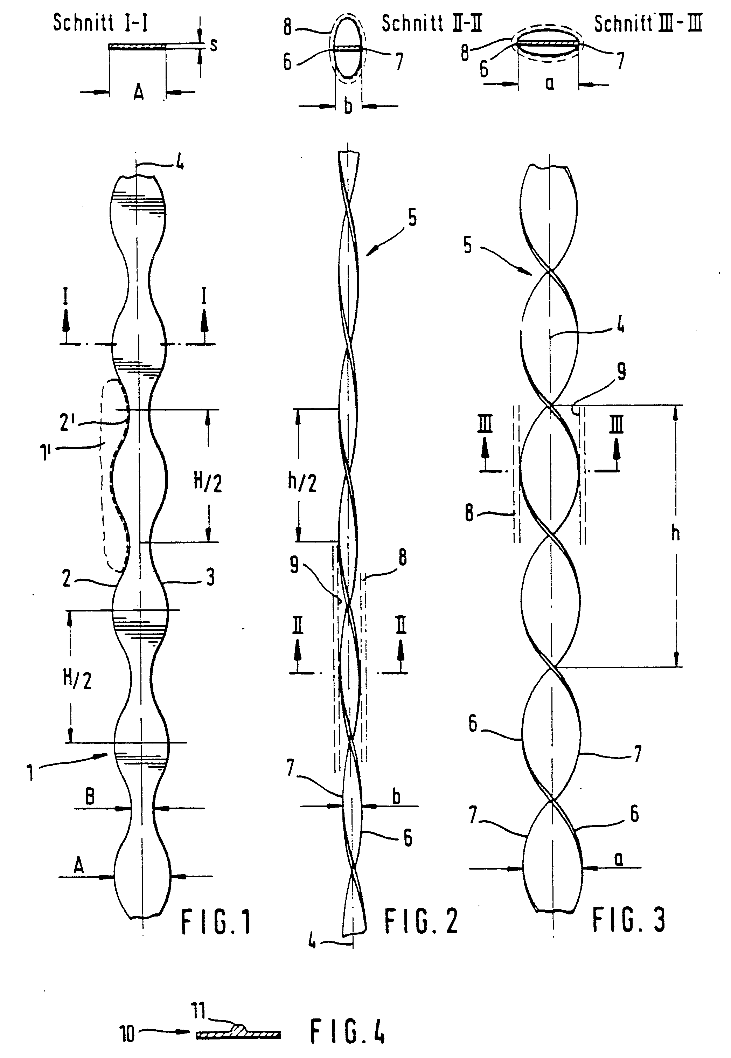

Figur 1 zeigt das ebene, bereits zugeschnittene Band 1, welches gemäß Schnitt I-I einen rechteckigen Querschnitt mit der Banddicke s und der variierenden Breite zwischen A und B aufweist. Die Breite des Bandes 1 variiert periodisch auf die Länge H/4 zwischen einem Minimum B und einem Maximum A, so daß sich beiderseits und symmetrisch zur Längsachse 4 des Bandes 1 jeweils ein wellenförmiger Verlauf der Ränder 2 und 3 des Bandes ergibt. Neben dem Band 1 ist durch eine gestrichelte Linie der Rand 2' eines weiteren Bandes 1' dargestellt, so daß also der Rand 2 des ersten Bandes 1 gleichzeitig den Rand des weiteren Bandes 1' bildet. Durch diesen deckungsgleichen Verlauf der Ränder 2 und 3 ist ein Zuschnitt der Bänder ohne Abfall möglich.

Die Figuren 2 und 3 zeigen eine Wendel 5, die durch Verdrillen des ebenen und « gewellten » Bandes 1 gemäß Figur 1 um dessen Längsachse 4 erzeugt wurde.

Figur 2 zeigt die Wendel 5 mit Blickrichtung auf deren Schmalseite und Figur 3 mit Blickrichtung auf deren Breitseite. Die Wendel 5 ist in ein Rohr mit einem elliptischen Querschnitt eingesetzt, wobei das Rohr 8 nur durch gestrichelte Linien dargestellt ist. Die Verdrillung des ebenen Bandes 1 erfolgt in der Weise, daß in Richtung der Längsachse 4 aufeinanderfolgende maximale und minimale Breiten A und B jeweils um 180° gegeneinander verdreht sind, d. h. auf die Länge H/2, was einer halben Steigung h/2 der Wendel 5 entspricht. Die wellenförmigen, ebenen Ränder 2 und 3 entsprechen also den räumlich verlaufenden Rändern 6 und 7 der Wendel 5, die allseits an der Innenwand 9 des Rohres anliegen. Die minimale Breite B des ebenen Streifens 1 entspricht somit der kleinen Halbachse b der Ellipse des Querschnittes des Rohres 8, während die maximale Breite A des ebenen Streifens 1 der großen Halbachse a der Ellipse des Querschnittes des Rohres 8 entspricht.

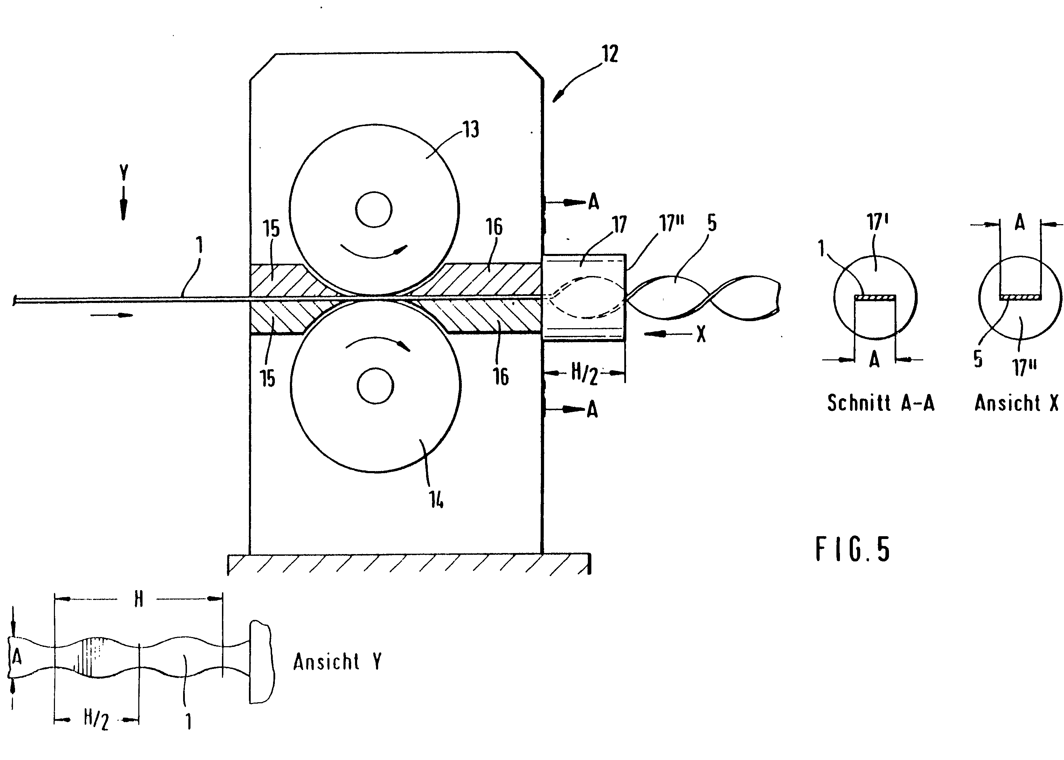

Figur 4 zeigt einen weiteren Querschnitt 10 für das Bandmaterial gemäß Figur 1, wobei dieser Bandquerschnitt 10 im Bereich der Längsachse eine Verdickung 11 aufweist, die als Verstärkung im Bereich der Drillachse dient. Diese Verstärkung kann auch in Form einer einfachen oder S-förmigen Sicke (keine Materialanhäufung) ausgebildet sein. Durch diese Maßnahme ergibt sich eine besonders richtungsstabile Wendel, die somit in bezug auf ihre Längsachse 4 eine erhöhte Steifigkeit erhält und daher für eine automatische Montage besonders geeignet ist.

Figur 5 zeigt schematisch eine Vorrichtung, die die Herstellung der Wendel 5 durch Verdrillen ermöglicht. Das bereits wellenförmig zugeschnittene Band 1 wird dabei einer Vorrichtung 12 zugeführt, die aus einem Paar von Transportwalzen 13 und 14 sowie beiderseits angeordneter zungenförmiger Führungsstücke 15, 16 besteht. Das Band 1 wird dabei an seiner Ober- und Unterseite von den Transportwalzen erfaßt und einer Düse 17 zum Verdrillen zugeführt. Die Düse 17 weist in ihrem Inneren einen — nur gestrichelt angedeuteten — Verdrillkanal auf, dessen Ein-und Austrittsquerschnitt in dem Schnitt A-A und in der Ansicht in Richtung X gezeigt ist. Die Eintrittsebene der Düse 17 ist mit 17' und die Austrittsebene mit 17" bezeichnet, wobei das Band 1 mit der Breite A bei einem Winkel von 0° (z. B. zur Horizontalen) in die Düse 17 eintritt und diese mit einem Verdrehwinkel von 180° wieder verläßt. Die Düse 17 hat somit einen halben « Gewindegang » von der Länge H/2 — das entspricht einer halben Steigung der fertigen Wendel 5. Im übrigen sind derartige Düsen zum Verdrillen von ebenen Bändern bekannt, z. B. durch die DE-A-24 21 550, allerdings nur zum Herstellen von wendelförmigen Turbulenzeinlagen für Rohre mit kreisförmigem Querschnitt, d. h. zum Verdrillen von Bändern mit konstanter Breite.

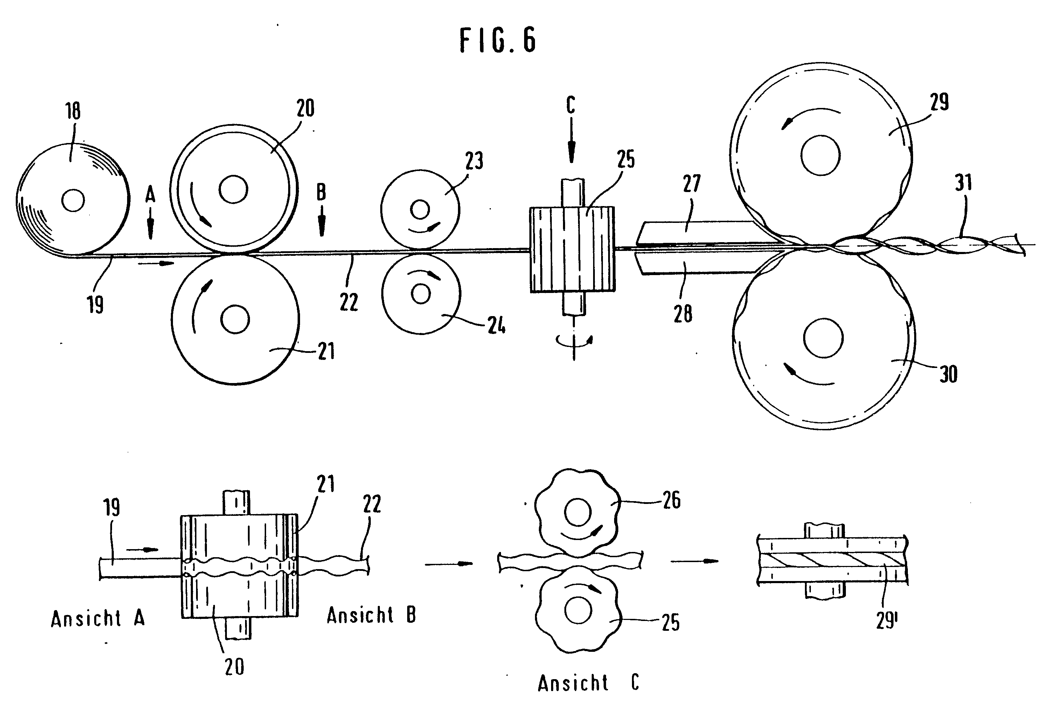

Figur 6 zeigt ein kontinuierliches Verfahren zum Herstellen einer Wendel durch Walzen. Dabei wird von einem Bandwickel 18 glattes Band 19 abgewickelt und einem Paar von Schneidwalzen 20, 21 zugeführt, die den wellenförmigen Zuschnitt bzw. ein gewelltes Band 22 erzeugen. Ein Paar von Transportwalzen 23, 24 bewirkt den Vorschub des gewellten Bandes 22 und führt dieses einem Paar von sogenannten Korrekturwalzen 25, 26 zu, die jeweils mit ihrem Umfang wie eine Verzahnung in die wellenförmigen Ränder des Bandes 22 eingreifen. Über Führungsstücke 27, 28 wird das gewellte Band 22 dann einem Paar von Umformwalzen 29, 30 zugeführt, die auf ihrem Umfang dem Verlauf der fertigen Wendel entsprechende Umformabschnitte 29' aufweisen, und durch Walzen zu einer Wendel 31 umgeformt. Die Korrekturwalzen 25, 26 gewährleisten die exakte Zuführung des zugeschnittenen Bandes 22 zu den Umformwalzen 29, 30.

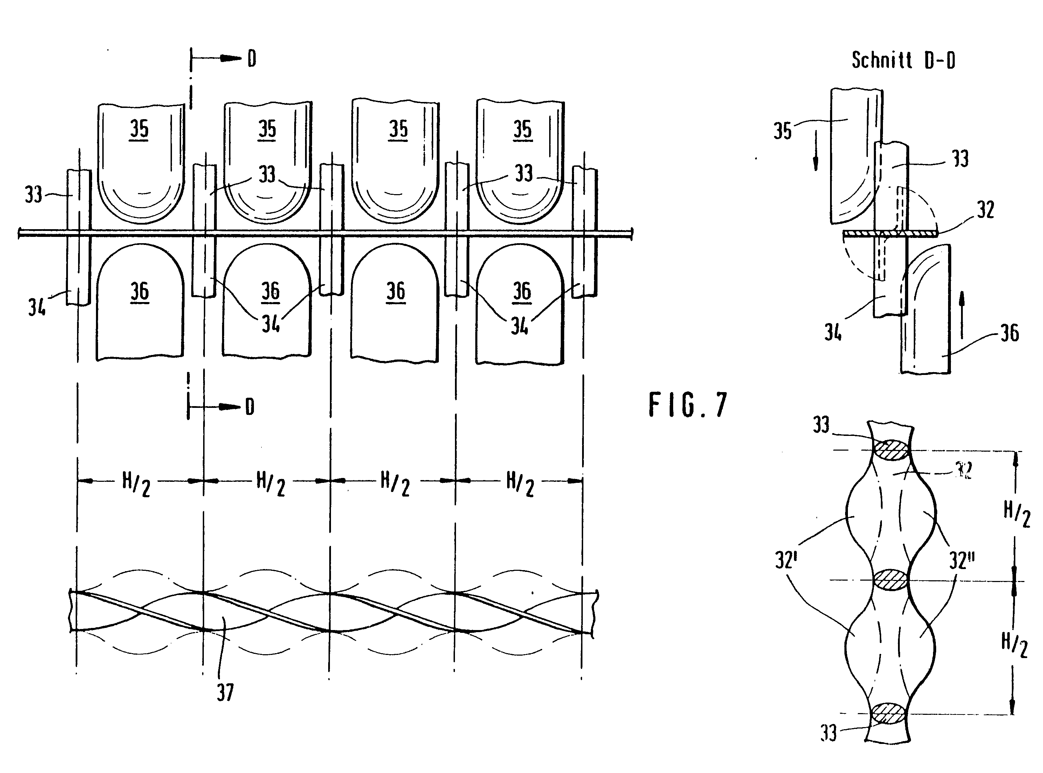

Figur 7 zeigt eine Vorrichtung zur Herstellung der Wendel durch Prägen. Das zugeschnittene Band 32 wird dabei zwischen sogenannten oberen und unteren Bandhaltern 33, 34 eingespannt, die jeweils in Abständen von H/2 und im Bereich der minimalen Breiten des zugeschnittenen Bandes 32 angeordnet sind. Durch obere und untere Stempel 35, 36, die nach unten bzw. oben bewegt werden, wird das ebene Band 32 in der Weise zu einer Wendel 37 verformt, indem die nach außen stehenden « Wellenberge » 32', 32" nach unten bzw. oben verformt werden. Durch entsprechende Ausbildung und Anordnung der Stempel 35, 36 kann für die fertige Wendel 37 abwechselnd eine links- und rechtsgängige Steigung hergestellt werden.

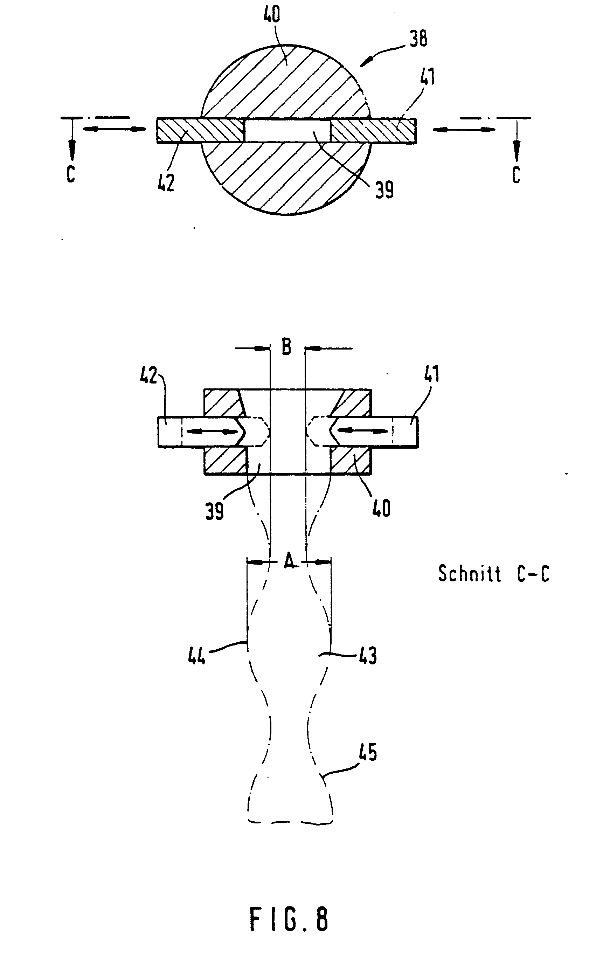

Figur 8 zeigt eine Extrusionsdüse 38 zur Herstellung einer Kunststoffwendel. Die Düse 38 ist dabei für eine an sich bekannte, hier nicht dargestellte Extrusionsmaschine vorgesehen und besteht aus einem Düsenkörper 40, der einen rechteckigen Kanalquerschnitt 39 aufweist, durch den das Kunststoffmaterial extrudiert wird und somit eine Form erhält. Während die Höhe des Kanalquerschnittes 39 konstant bleibt, ist die Breite des Kanalquerschnittes 39 variabel, und zwar infolge der beweglich angeordneten Gleitstücke 41 und 42, die eine periodische Variation der Breite zwischen den Größen A und B erlauben. Durch eine entsprechende Steuerung der Fließgeschwindigkeit des Kunststoffes durch den Kanalquerschnitt 39 und der Gleitstücke 41 und 42 quer zur Fließrichtung kann ein ebener Kunststoffstreifen 43 mit wellenförmigen Rändern 44, 45 erzeugt werden. Dieser wellenförmige extrudierte Kunststoffstreifen 43 kann anschließend durch geeignete Verfahren zu einer Wendel verformt, z. B. mittels einer Düse verdrillt werden. Somit ist der wellenförmige Verlauf des ebenen Streifens auch für das Material Kunststoff anwendbar.

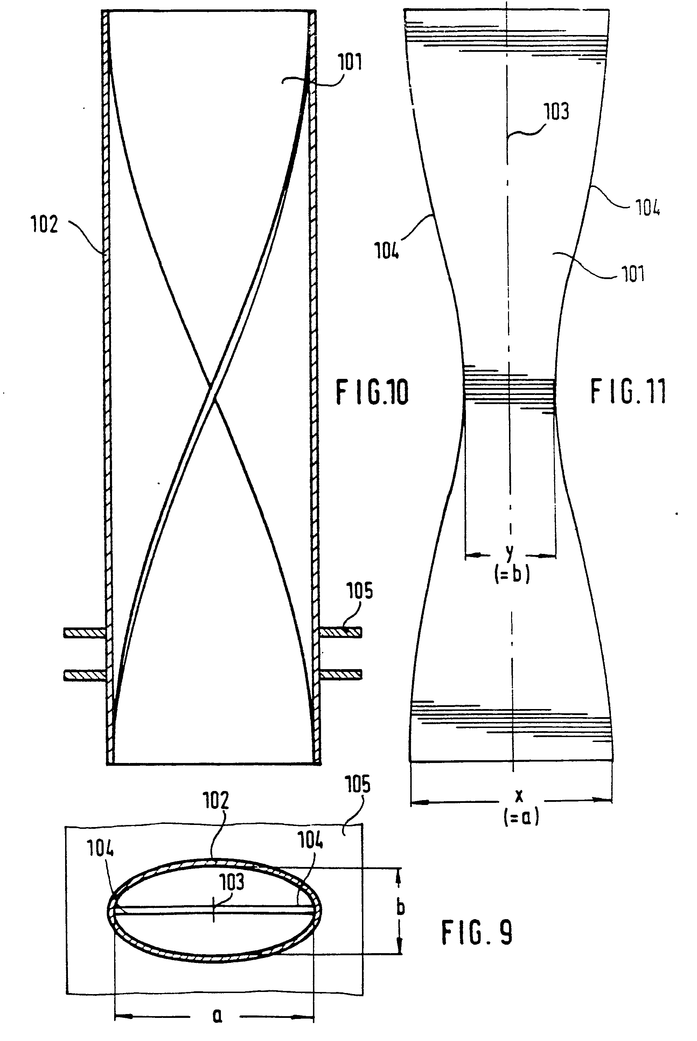

Der Wärmetauscher gemäß den Figuren 9, 10 und 12, 13 besteht aus einem gewendelten (verdrillten) Blechstreifen 101 und einem diesen Blechstreifen 101 formgetreu aufnehmenden elliptischen Wärmetauscherrohr 102, das mit Lamellen 105 versehen ist.

Der elliptische Umriß der aus dem Blechstreifen 101 gedrehten Wendel ist konform mit dem Wärmetauscherrohr 102 gestaltet.

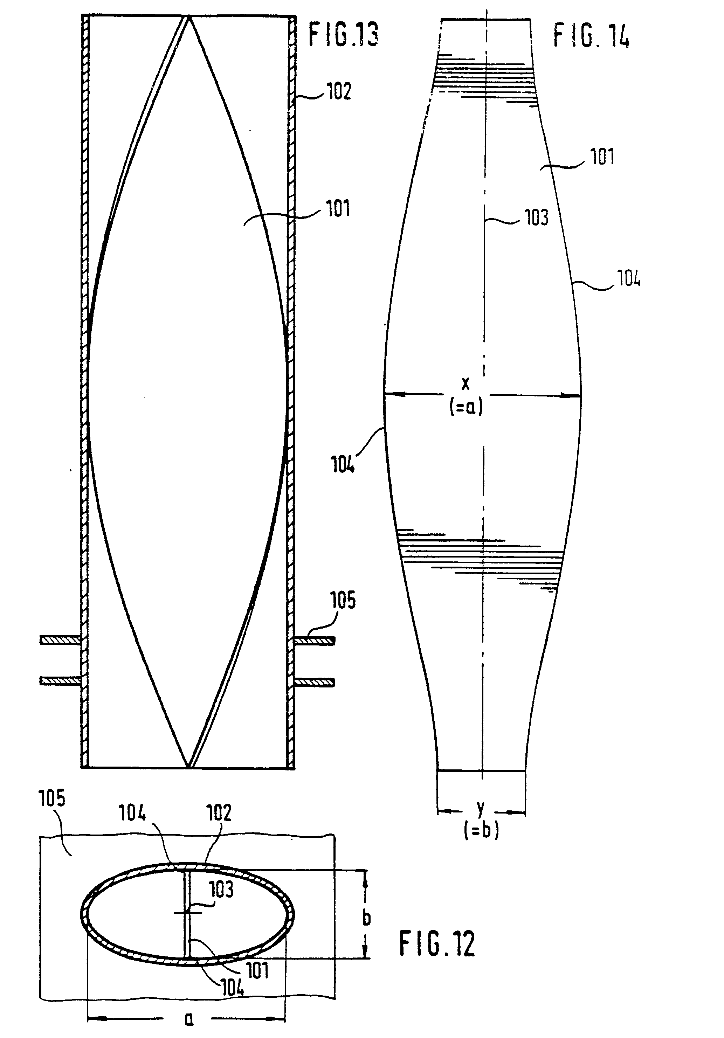

Der Blechstreifen 101 ist um seine Mittelachse 103 verwunden und seine Breite variiert, wie Figuren 11 und 14 zeigen, stetig zwischen den der längeren Ellipsenachse a und der kürzeren Ellipsenachse b entsprechenden Maßen x bzw. y.

Die beiden Ränder 104 des Blechstreifens 101 liegen satt an der Innenwandung des Wärmetauscherrohres 102 an und können gewünschtenfalls zur weiteren Erhöhung der Steifigkeit des Wärmetauschers mit der Innenwand des Wärmetauscherrohres 102 fest verbunden sein, z. B. verlötet oder verschweißt.

Die Beheizung des mit der längeren Ellipsenachse a stehend anzuordnenden, ein beliebiges Heizmedium führenden Wärmetauscherrohres 102, erfolgt beispielsweise über einen nicht dargestellten Brenner von unten her, wobei die hohen Flanken des Wärmetauscherrohres 102 vorteilhaft von den aufsteigenden Verbrennungsgasen umspült und unter wirtschaftlicher Ausnutzung deren Hitze erwärmt werden. Die Wendel 101 sorgt dabei für eine den Wärmetausch begünstigende Rotation des das Wärmetauscherrohr durchströmenden Mediums.

Ein Wärmetauscher besteht aus etwa drei bis sechs parallel zueinander in einer Ebene waagerecht angeordneten Wärmetauscherrohren 102 und ist in ein Gehäuse eines Gaswasserheizers eingebaut, um kaltes Wasser im Durchlauf, ohne Siedegeräusche zu erzeugen, zu erwärmen.

Die elliptische, längliche Gestaltung der Wendel und des sie aufnehmenden Wärmetauscherrohres erzielt den Vorteil, daß das im Wärmetauscherrohr strömende Medium mit einer außerhalb des Wärmetauscherrohres befindlichen Wärmequelle, z. B. von der Hitze eines unterhalb der Wendel angeordneten Brenners, in guten und wirksamen Kontakt gebracht werden kann, indem das strömende Medium über die Längsseiten des Wärmetauscherrohres zwangsweise von oben nach unten bzw. von links nach rechts geführt wird. Hierbei geht eine Verminderung etwaiger Siedegeräusche bei Anwendung bei einem abgasbeheizten Durchlauferhitzer Hand in Hand.

Davon abgesehen, hat der erfindungsgemäße Wärmetauscher den bereits erwähnten Vorteil, daß er besonders materialsparend und leichtgewichtig sowie preiswert, aber dennoch sehr steif und formbeständig angefertigt werden kann.

## Patentansprüche

1. Wärmetauscherrohr mit elliptischem oder ovalem Querschnitt und einem als Wendel ausgebildeten Turbulenzeinbau, wobei das Wärmetauscherrohr innen von einer Flüssigkeit, insbesondere Wasser, durchströmt und außen von einem Gas, insbesondere Luft, beaufschlagt ist, dadurch gekennzeichnet, daß die Projektion der Wendel in Richtung der Längsachse des Rohres den gesamten Querschnitt des Rohres ausfüllt, daß die Breite der Wendel (5) periodisch zwischen einem Minimum (B) und einem Maximum (A) variiert und die Wendel in der Weise verdrillt ist, daß die in Richtung der Längsachse (4) des Rohres (8) in einem der halben Steigung der Wendel entsprechenden Abstand aufeinanderfolgenden maximalen und minimalen Breiten jeweils um 180° gegeneinander verdreht sind, wobei die räumlich verlaufenden Ränder (6, 7) der Wendel an der Innenwand (9) des Rohres anliegen.

2. Wärmetauscherrohr nach Anspruch 1, dadurch gekennzeichnet, daß die Wendel (5) aus metallischem Bandmaterial besteht.

3. Wärmetauscherrohr nach Anspruch 1 oder 2, dadurch gekennzeichnet, daß die Wendel (5) im Bereich ihrer Längsachse (4) eine Verstärkung (11) aufweisen.

4. Wärmetauscherrohr nach Anspruch 1 oder 2, dadurch gekennzeichnet, daß die Wendel (5) aus Kunststoff besteht.

5. Wärmetauscherrohr nach einem der Ansprüche 1 bis 4, dadurch gekennzeichnet, daß die Steigung h der Wendel (5) abwechselnd sowohl links- als auch rechtsgängig ist.

6. Wärmetauscherrohr nach Anspruch 1, dadurch gekennzeichnet, daß die beiden Ränder (6, 7) der Wendel (5) mit der Innenwand (9) des Rohres (8) verbunden sind.

7. Verfahren zur Herstellung einer Wendel nach einem der Ansprüche 1 bis 3 und 5, dadurch gekennzeichnet, daß die Ränder (2, 3) eines ebenen Bandes (1) wellenförmig zugeschnitten werden, wobei die maximale Breite A der großen Achse a des Rohrquerschnittes, die minimale Breite B der kleinen Achse b des Rohrquerschnittes entsprechen, und daß das dermaßen zugeschnittene Band anschließend in der Weise zu einer Wendel verformt wird, daß der Abstand H/2 der maximalen Breiten A und der minimalen Breiten B auf der Längsachse (4) der halben Steigung h/2 der Wendel (5) entsprechen.

8. Verfahren nach Anspruch 7, dadurch gekennzeichnet, daß das zugeschnittene Band (1) einer Düse (17) mit einem Verdrillkanal, dessen Steigung den Abständen H des zugeschnittenen Streifens (1) bzw. der Steigung h der fertigen Wendel (5) entspricht, zugeführt und durch Verdrillung in der Düse zu einer Wendel (5) verformt wird.

9. Verfahren nach Anspruch 7, dadurch gekennzeichnet, daß das zugeschnittene Band (32) durch eine Vielzahl von Stempeln (35, 36) durch Prägen zu einer Wendel (37) verformt wird.

10. Verfahren nach Anspruch 7, dadurch gekennzeichnet, daß das zugeschnittene Band (22) einem Paar von Umformwalzen (29, 30) zugeführt und durch Walzen zu einer Wendel (31) verformt wird.

11. Verfahren nach einem der Ansprüche 7 bis 10, dadurch gekennzeichnet, daß das ebene Band als endloses Band (19) von einem Bandwickel (18) genommen und durch ein Paar von Schneidwalzen (20, 21) wellenförmig zugeschnitten wird.

12. Verfahren zur Herstellung einer Wendel nach Anspruch 4, dadurch gekennzeichnet, daß ein ebener Streifen (43), dessen Ränder (44, 45) einen wellenförmigen Verlauf aufweisen, aus einer Flachdüse (38, 39) mit periodisch alternierender Breite (A, B) extrudiert wird.

## Claims

1. A heat exchanger tube which is elliptical or oval in cross-section and contains a helix as a turbulence-producing internal fixture and is flown through in its interior by a liquid, particularly air, characterized in that the projection of the helix in the direction of the longitudinal axis of the tube occupies the entire cross-section of the tube, the width of the helix (5) periodically varies between a minimum (8) and a maximum (A) and the helix is twisted so that the maximum and minimum widths which follow each other in the direction of the longitudinal axis (4) of the tube (8) at a distance which equals one-half of the pitch of the helix are offset from each other by 180° and the three-dimensionally shaped edges (6, 7) of the helix contact the inside surface (9) of the tube.

2. A heat exchanger tube according to claim 1, characterized in that the helix (5) consists of metal strip.

3. A heat exchanger tube according to claim 1 or 2, characterized in that the helix (5) has a reinforcement adjacent to its longitudinal axis (4).

4. A heat exchanger tube according to claim 1 or 2, characterized in that the helix (5) consists of plastic.

5. A heat exchanger tube according to any of claims 1 to 4, characterized in that the lead h of the helix (5) is left-handed and right-handed in alternation.

6. A heat exchanger tube according to claim 1, characterized in that the two edges (6, 7) of the helix (5) are joined to the inside surface (9) of the tube (8).

7. A process of manufacturing a helix according to any of claims 1 to 3 and 5, characterized in that the edges (2, 3) of a flat strip (1) are cut to have a wave shape in such a manner that the maximum width A corresponds to the major axis a of the cross-section of the tube and the minimum width B corresponds to the minor axis b of the cross-section of the tube, and the strip which has been cut is deformed to a helix in which the distance H/2 between the maximum widths A and the minimum widths B on the longitudinal axis (4) corresponds to one-half (h/2) of the pitch of the helix (5).

8. A process according to claim 7, characterized in that the strip (1) which has been cut is fed to a die (17), which has a twisting passage having a pitch that is equal to the distances H in the cut strip (1) and to the pitch h of the complete helix (5) and the strip is twisted in the die to form a helix (5).

9. A process according to claim 7, characterized in that the strip (32) which has been cut is embossed to form a helix (37) by a plurality of punches (35, 36).

10. A process according to claim 7, characterized in that the strip (22) which has been cut is fed to a pair of deforming rolls (29, 30) and is deformed by rolling to the shape of a helix (31).

11. A process according to any of claims 7 to 10, characterized in that the flat strip is taken as an endless strip (19) from a coil (18) of strip and is cut by a pair of cutting rolls (20, 21) to have a wave shape.

12. A process of manufacturing a helix according to claim 4, characterized in that a flat strip (43) having wave-shaped edges (44, 45) is extruded from a flat die (38, 39) to have a periodically alternating width (A, B).

### Revendications

1. Tube échangeur de chaleur à section elliptique ou ovale et avec un élément de turbulence en hélice, le tube étant rempli d'un liquide, de préférence de l'eau, en circulation, et léché extérieurement par un gaz, notamment de l'air, caractérisé par le fait que la projection de l'hélice en direction de l'axe longitudinal du tube occupe la totalité de la section du tube, que la largeur de l'hélice (5) varie périodiquement entre un minimum (B) et un maximum (A) et que l'hélice est conçue de sorte que les largeurs maxi et mini qui se suivent le long de l'axe (4) du tube (8) à une distance correspondant au demi-pas de l'hélice, sont décalées l'une par rapport à l'autre de 180°, les bords (6, 7) de l'hélice touchant la paroi intérieure (9) du tube.

2. Tube échangeur de chaleur suivant la revendication 1, caractérisé par le fait que l'hélice (5) est faite d'une bande métallique.

3. Tube échangeur de chaleur suivant la revendication 1 ou 2, caractérisé par le fait que l'hélice (5) présente le long de son axe (4) une saillie (11).

4. Tube échangeur de chaleur suivant la revendication 1 ou 2, caractérisé par le fait que l'hélice (5) est faite en matière plastique.

5. Tube échangeur de chaleur suivant la revendication 1 à 4, caractérisé par le fait que le pas h de l'hélice (5) alterne entre pas à gauche et pas à droite.

6. Tube échangeur de chaleur suivant la revendication 1, caractérisé par le fait que les deux bords (6, 7) de l'hélice (5) sont solidaires de la paroi intérieure (9) du tube (8).

7. Procédé pour la fabrication d'une hélice suivant l'une des revendications 1 à 3 et 5, caractérisé par le fait que les bords (2, 3) d'une bande plate (1) sont découpés en forme ondulée, la largeur maxi A correspondant au grand axe « a » de la section du tube, et la largeur mini B, au petit axe « b » de la section du tube, et qu'ensuite la bande ainsi formée est torsadée de sorte que la distance H/2 entre les largeurs maxi A et les largeurs mini B le long de l'axe (4) corresponde au demi-pas h/2 de l'hélice (5).

8. Procédé suivant la revendication 7, caractérisé par le fait que la bande (1) ainsi préparée est introduite dans une buse (17) comportant un élément de torsion dont le pas correspond aux distances H de la bande (1) ou au pas h de l'hélice (5), et tordue pour former une hélice (5).

9. Procédé suivant la revendication 7, caractérisé par le fait que la bande préparée (32) est transformée en une hélice (37) par l'action de nombreux poinçons (35, 36).

10. Procédé suivant la revendication 7, caractérisé par le fait que la bande préparée (22) est amenée entre deux cylindres transformateurs (29, 30) qui en font une hélice (31).

11. Procédé suivant l'une des revendications 7 à 10, caractérisé par le fait que la bande primitive (19) est déroulée en continu d'un tambour (18) et subit une coupe ondulée par deux cylindres découpeurs (20, 21).

12. Procédé pour la fabrication d'une hélice suivant la revendication 4, caractérisé par le fait qu'une bande plate (43) dont les bords (44, 45) ont une forme ondulée, est extrudée à travers une filière plate (38, 39) aux sections (A, B) alternant périodiquement.

Schnitt I-I

Schnitt II-II

Schnitt III-III

FIG.1

FIG.2

FIG.3

FIG.4

Schnitt A-A   Ansicht X

0 184 544

F I G. 5

Ansicht Y

# FIG. 6

Ansicht A   Ansicht B

Ansicht C

0 184 544

Schnitt D-D

F I G . 7

0 184 544

40

38

41

42

39

C          C

B

42                                    41

39        40

A

Schnitt C-C

44                              43

45

FIG. 8

FIG.10

FIG.11

FIG. 9

FIG.13

102

101

105

FIG. 14

101

103

104

x
(=a)

104

y
(=b)

105

104    102

103

b

101

104

a

FIG.12